# EUROPEAN PATENT APPLICATION

(11) **EP 2 645 320 A1**
(43) Date of publication of application: **02.10.2013**
(21) Application number: 13161226.9
(22) Date of filing: 27.03.2013
(51) Int. Cl.: G06Q 10/10, G06Q 50/18, G06F 3/12

(54) **Method and related apparatus for generating online and printing on-demand compilation of works with automatic copyright verification and certification**

(30) Priority: 30.03.2012 US 201213435888
(71) Applicant: Konica Minolta Laboratory U.S.A., Inc., San Mateo CA 94403 (US)
(72) Inventor: Asao, David, San Mateo, CA 94403 (US); Barber, Daniel, San Mateo, CA 94403 (US); Defay Wu, Philip, San Mateo, CA 94403 (US); Fujimori, Toshiro, San Mateo, CA 94403 (US)
(74) Representative: Gille Hrabal

(57) **Abstract**

A method of verifying intellectual property rights of a compilation of works generated for print on-demand (POD) purchase, including the steps of compiling the compilation of works, and before making the compilation of works available for purchase, automatically verifying intellectual property right of each of the works compiled to ensure legitimate distribution of the compilation of works.

## Description

### BACKGROUND OF THE INVENTION

### Field of the Invention

This invention generally relates to a method and related apparatus for generating online and printing on-demand compilation of works, and in particular, it relates to managing contents and assembling articles into booklets which can be printed on-demand with automatic copyright verification and certification.

### Description of Related Art

The rapid development of new printing and telecommunication technologies has made it possible to generate and provide customized compilation of works in printed or other electronic forms on a print-on-demand (POD) basis, which generally refers to production of commercial-quality finished products in printed or electronic forms such as books and compilation booklets on a relatively small scale, typically by a professional print shop, at the request of customers.

One example of generating and producing compilations of works may be that in many educational institutions, a teacher or professor often needs to assemble a group of works and compile them into a volume of course materials. Another example may be that in a business entity or an organization, an instructor or trainer needs to assemble a group of works and compile them into a booklet of training materials. Such works may include previously published papers or articles, images and graphics *etc.* which may be available in hard copies traditionally but now increasingly in electronic (digital) formats, such as in the portable document (PDF) format. These works may include PDF files in the teacher or instructor's own collection, *e.g.,* stored in his or her own computer storage device such as a hard disc drive, or in a file folder assigned to him or her on a server of the institution or organization. These works may also include PDF files in other third parties' collections, *e.g.,* stored in the third parties' servers and may be accessed via a computer network such as the Internet by using uniform resource locator (URL) links.

Once the teacher or instructor selects the PDF files, they can be assembled together to generate a compilation of works. After a compilation of works is generated into a volume or booklet of articles, students or organization members may purchase the volume or booklet by placing POD orders with a print shop that can print and deliver the volumes or booklets to the students or members.

It is important that when a volume or booklet of compilation of works are purchased, all required and necessary copyright licenses or permissions for all articles and contents used in the compilation of works are in place so that there will be no intellectual property (IP) right problems when the volume or booklet is subsequently purchased and printed. Therefore it is desirable to provide a more efficient and cost-effective method and related apparatus for online generation and purchase of compilations of works on a POD basis with automatic copyright verification and certification.

### SUMMARY

The present invention is directed to a method and related apparatus for generating and printing compilations of works, which provides a more efficient and economical online platform for easily managing contents and assembling articles into booklets that can be readily ordered and printed on-demand with automatic intellectual property (IP) rights verification and certification.

Additional features and advantages of the invention will be set forth in the descriptions that follow and in part will be apparent from the description, or may be learned by practice of the invention. The objectives and other advantages of the invention will be realized and attained by the structure particularly pointed out in the written description and claims thereof as well as the appended drawings.

To achieve these and/or other objects, as embodied and broadly described, the present invention provides a method of verifying intellectual property rights of a compilation of works generated for print on-demand (POD) purchase, including the steps of compiling the compilation of works, and before making the compilation of works available for purchase, automatically verifying intellectual property right of each of the works compiled to ensure legitimate distribution of the compilation of works.

In another aspect, one exemplary embodiment of the present invention further provides a computer program that causes a data processing apparatus to perform the above methods. The computer program controlling a data processing apparatus, the computer program configured to cause the data processing apparatus to execute the above method.

It is to be understood that both the foregoing general description and the following detailed description are exemplary and explanatory and are intended to provide further explanation of the invention as claimed.

### BRIEF DESCRIPTION OF THE DRAWINGS

Fig. 1 schematically illustrates an exemplary online environment in which embodiments of the present invention may be implemented.
Fig. 2 schematically illustrates an exemplary computer program architecture in which embodiments of the present invention may be implemented.
Fig. 3 schematically illustrates an exemplary process for online management of contents and generation of booklets as parts of a computer-implemented method for generating and printing compilations of works in accordance with an embodiment of the present invention.
Figs. 4-24 illustrate screen shots from executing various steps of the exemplary process for online management of contents as shown in Fig. 3.

### DETAILED DESCRIPTION OF PREFERRED EMBODIMENTS

Embodiments of the present invention provide a more efficient and cost-effective method and related apparatus for online management, generation and purchase of compilations of works on a print-on-demand (POD) basis with steps for automatic verification and certification of intellectual property (IP) rights including copyrights required for printing and using the compilation of works.

As an example of practical scenarios of the need for managing, generating and printing compilations of works, a teacher or professor in an educational institution may need to assemble educational materials for the students to order and purchase. As another example of practical scenarios of such need, an instructor or trainer of a business entity or organization may need to assemble training materials for the members to order and purchase.

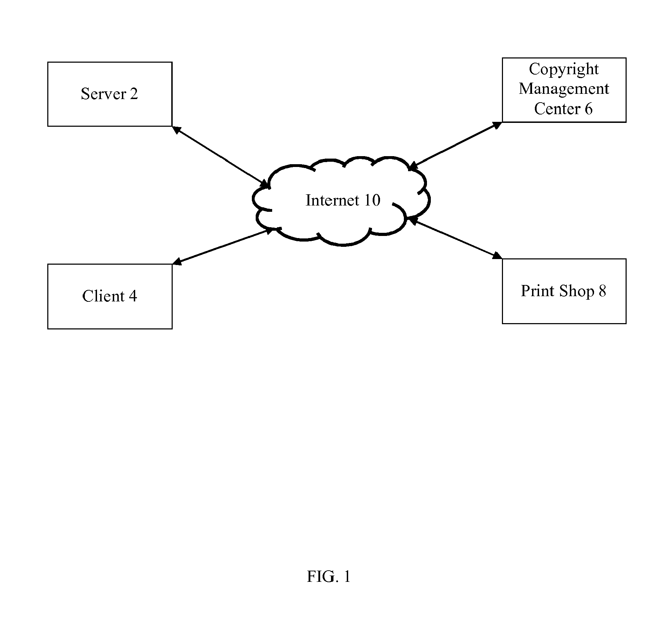

Referring to Fig. 1, there is schematically illustrated an exemplary online environment in which embodiments of the present invention may be implemented. The exemplary online environment includes a server 2, a client computer 4, one or more copyright management center servers 6, and a print shop server 8, connected via one or more computer network 10 such as the Internet or other communication links. A client (such as a teacher or a trainer, or a student or a member of an organization) uses the client computer 4 to interact with the server 2. The server 2 executes a computer program stored in a memory to perform processes according to the embodiments of the present invention. The copyright management center servers 6 stores digital contents and associated copyright data or license information that may be obtained for use by the clients. The print shop may be a professional print shop equipped with printers and various other image reproduction machines for producing printed products such as books, booklets, *etc.* The print shop server 8 manages the print jobs submitted to the print shop by the clients or customers.

The server 2 generally provides an integrated service that allows a client to search and acquire contents from content sources, to compile them into an electronic file and submit the compiled file to a POD service to produce a printed product, and to order and purchase the printed product of the compiled works. The clients may access the server 2 from their own computers 4 via the network 10 once they establish their user accounts on the server 2. The server 2 may interact with the copyright management center server 6 for searching and obtaining contents of the works to be compiled. The server 2 may also interact with the print shop server 8 for printing and delivering the compiled works in hard copy or electronic forms.

In this application, the term "copyright management center" generally refers to a place or service that facilitates the management and distribution of copyrighted materials and the obtaining and transferring of payment to copyright holders. Typically, a copyright management center facilitates legitimate access to copyrighted content by providing a copyright registry, where users can locate copyright information about a work, by also providing a copyright marketplace exchange, where users can buy and sell copyrights, and by further providing a copyright clearance service that can connect with third party distribution platforms. Examples of such copyright management centers may include digital repository of published work maintained by some publishers or digital libraries maintained by various organizations. Another example of copyright management center is the Copyright Clearance Center.

Therefore, "copyright management center 6" of the online environment shown in Fig. 1 may include any types of sources of digital contents and their copyright data and license information. More generally, "copyright management center 6" of the online environment shown in Fig. 1 may also include any third party content sources such as databases or depositories where hard or electronic copies of articles, publications or other contents and works may be stored or otherwise kept.

The physical locations or the commercial relationship among the various components of the online environment shown in Fig. 1 are not important. For example, the server 2 may be operated by the copyright management center, or the print shop, or a separate institution, organization or commercial establishment.

Also in this application the term "client" generally refers to a customer or anyone who uses the method or related apparatus provided by the embodiments of the present invention. For example it may refer to a teacher or student in an educational institute, or an instructor or a member in an organization. Specifically for the process described in this application, "client" may refer to "booklet compiler" and "booklet reader", where "booklet compiler" (or "compiler") refers to anyone who manages the contents or articles, and generates compilation of works from the contents or articles, and "booklet reader" (or "reader") refers to anyone who orders the printing or purchases the finished product of the compilation of works that have already been generated. For example, a compiler may be a teacher in an educational institute or an instructor of an organization, whereas a reader may be a student in the educational institute or a member of the organization.

Both the compilers and the readers may have access accounts at the server 2 and share some common rights or features on the server 2, but some of their other rights may be different. For example, a compiler may have right to generate a booklet from compilation of works, whereas a reader may not have such right but may have right to order prints of the booklet. These details will become more apparent and clear in the description below.

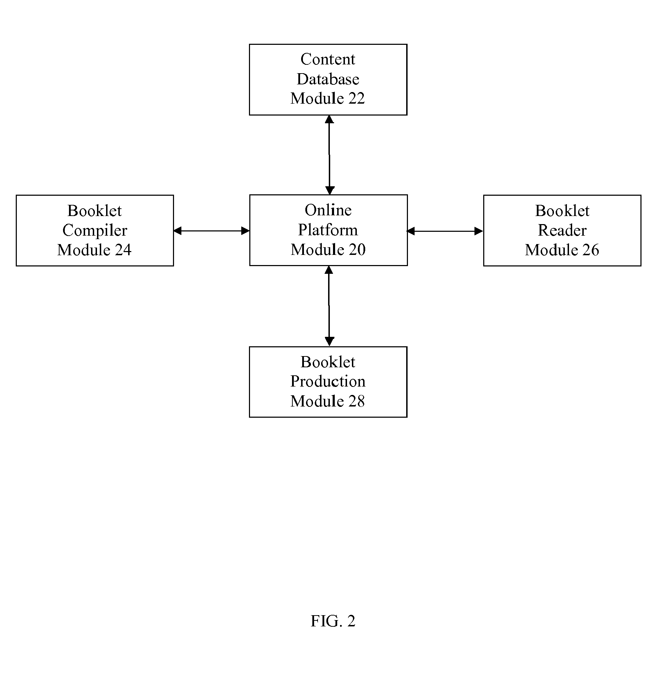

As mentioned earlier, in one aspect the present invention is embodied a computer program product that causes a data processing apparatus to perform the methods of the present invention. The computer program product includes a computer usable non-transitory medium (*e.g*. memory or storage device) having a computer readable program code embedded therein for controlling a data processing apparatus, where the computer readable program code is configured to cause the data processing apparatus to execute the method of the present invention. The computer readable program code includes many functional modules and the essential ones that are closely related to the steps of the process described below are exemplarily shown in Fig. 2.

Referring to Fig. 2, there is schematically shown an exemplary computer program architecture in which embodiments of the present invention may be implemented. The computer program architecture shown in Fig. 2 includes functional modules that are essential and closely related to the steps of the process according to the present invention.

More specifically, there is shown an online platform module 20 that controls and executes the operations at the server 2 (and/or the print shop server 8) shown in Fig. 1 for providing an online platform to implement the relevant steps of the present invention process, including but not limited to, providing a user interface (UI) to the clients, providing clients account and access management on the server 2, providing folder structure and data storage management to the clients on the server 2, and providing online ordering and payment capacities on the server 2, *etc.*

There is also shown in Fig. 2 a booklet compiler module 24 that controls and executes the operations at the customer's computer 4 or server 2 (and/or the server at copyright management center 6) shown in Fig. 1 for providing access to server 2 by a compiler, managing the compiler's account information at the server 2, managing the file folders assigned to the compiler, creating and editing booklets, ordering booklets and paying online, *etc.*

There is further shown in Fig. 2 a booklet reader module 26 that controls and executes the operations at the customer's computer 4 or server 2 (and/or the server at copyright management center 6) shown in Fig. 1 for providing access to server 2 by a reader, managing the reader's account information at the server 2, browsing and searching for booklets, ordering booklets and paying online, *etc.*

In addition, there is shown in Fig. 2 a booklet production module 28 that controls and executes the operations at the server 2 (and/or the server at print shop 8) shown in Fig. 1 for processing print orders made at the online platform 20, processing payment for purchases of booklets, making print job orders, transmitting electronic files of the booklets to the print shop server 8, and handling production, assembly and delivery of booklets, *etc.*

It is understood that the exemplary computer program architecture in which embodiments of the present invention may be implemented may include other functional modules not shown in Fig. 2 that facilitates the execution of the steps of the process in accordance with the method of the present invention.

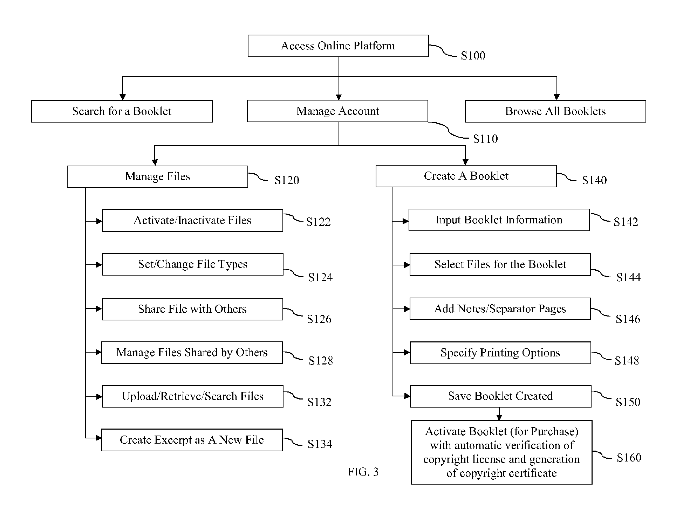

Referring to Fig. 3, there is shown a schematic illustration of an exemplary process for online management of contents and generation of booklets as parts of a computer-implemented method for generating and printing compilations of works in accordance with an embodiment of the present invention. Generally the steps shown in Fig. 3 reflect the steps that a compiler will take to manage the files and create booklets on the server that provides the online platform, *e.g.,* server 2 shown in Fig. 1. Of course anyone who has the access to the server and authority to manage file folders assigned to him or her on the server can take these steps to manage his or her files on the server, not necessarily a compiler.

As Step S100 shown in Fig. 3, the compiler accesses the online platform by, *e.g*., access the web-site of the online platform. The compiler typically needs to provide a valid username and a matching password to log in.

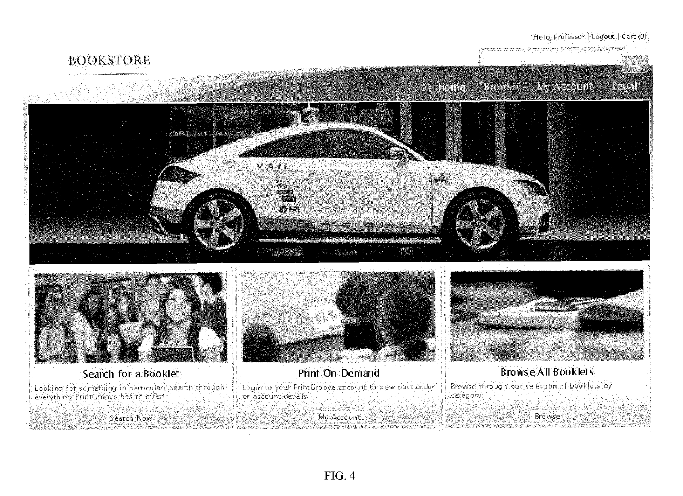

Referring to Fig. 4, there is shown a screen shot of an exemplary user interface (UI) display of the home page of the online platform web-site, in this example an online bookstore, after the compiler logs into the web-site. From this home page the compiler may search for a booklet by clicking on "Search Now" at the lower left portion of the screen, access his or her account by clicking on, *e.g*., "My Account" at either the top menu bar or the lower middle portion of the screen, or browse all booklets by clicking on, *e.g.,* "Browse" at either the top menu bar or the lower right portion of the screen.

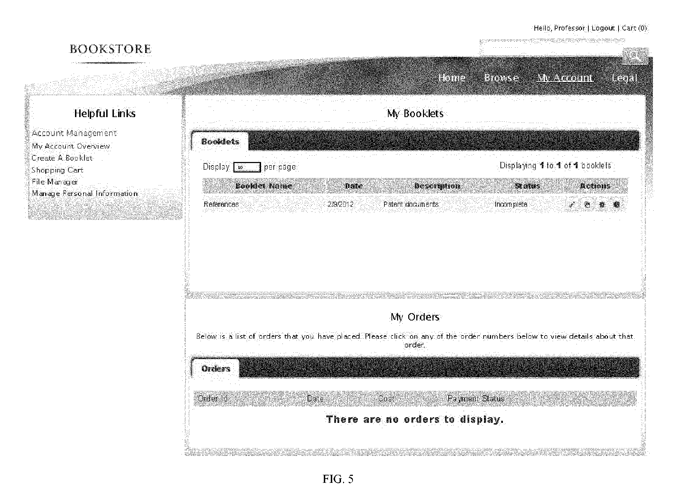

At Step S110 shown in Fig. 3, the compiler may access his or her account by clicking on, *e.g*., "My Account" at either the top menu bar or the lower middle portion of the screen shown in Fig. 4. This will take the compiler to the "Account Overview" page as shown in Fig. 5.

Referring to Fig. 5, there is shown a screen shot of an exemplary UI display of the "Account Overview" page of the online platform web-site. On this page the compiler may see a list of the booklets that have been generated or are in progress, and also the status of all orders placed by the compiler. On the booklet list, each booklet is listed with its name, date of creation, its brief description, and its status. For example, a booklet in progress may be listed as "incomplete" (in progress), "ready" (generated but not activated for ordering), or "active" (activated for ordering). Under the "actions" menu heading at the end of the book list, there are icons for actions that may be taken on each of the booklet. For example, the action icons may include an icon for editing the booklet information, an icon for editing the booklet files, an icon for editing print options, and an icon for activating/deactivating the booklet.

On the left portion of the "Account Overview" page shown in Fig. 5, the compiler may click on the "File Manager" link to manage his or her files, or click on the "Create A Booklet" link to generate a booklet. The compiler may also click on the "Manage Personal Information" link to edit his or her personal information, or click on the "Shopping Cart" link to check out the items he or she has intends to order.

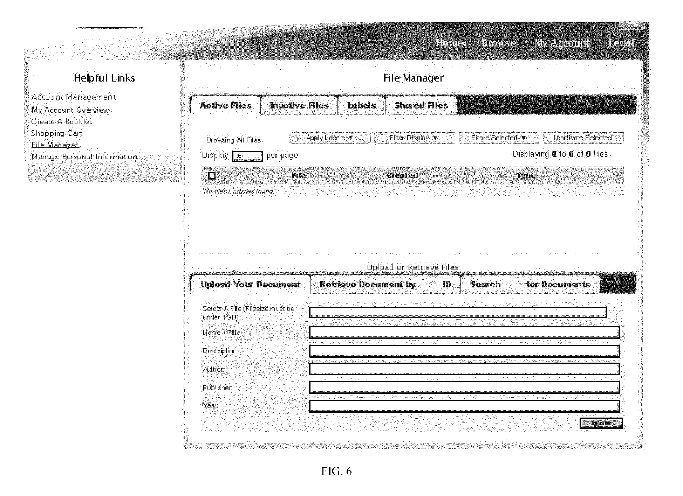

At Step S120 shown in Fig. 3, the compiler performs file management tasks by clicking on the "File Manager" link as shown in Fig. 5. This will take the compiler to the "File Manager" page of the online platform web-site as shown in Fig. 6.

Referring to Fig. 6, there is shown a screen shot of an exemplary UI display of the "File Manager" page of the online platform web-site. On this page the compiler may see a list of his or her files stored on the server, and upload or retrieve files. The main menu bar has buttons that allow the compiler to list "Active Files" that are made active (*i.e.,* can be used in a booklet or shared), "Inactive Files" that remain inactive, "Labels" that are used to label the files, and "Shared Files" that are shared by other colleagues of the compiler.

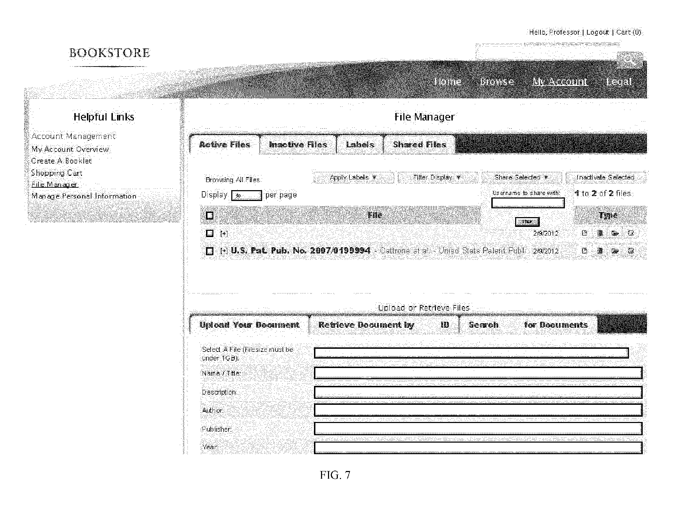

Referring to Fig. 7, there is shown a screen shot of an exemplary UI display of the "Active Files" page of the online platform web-site, upon which the active or activated files are listed. Using the supplemental menu bar under the main menu bar, the compiler may apply labels to the files, use filters to display files according to their labels, share selected files with the compiler's colleagues, and deactivate selected files.

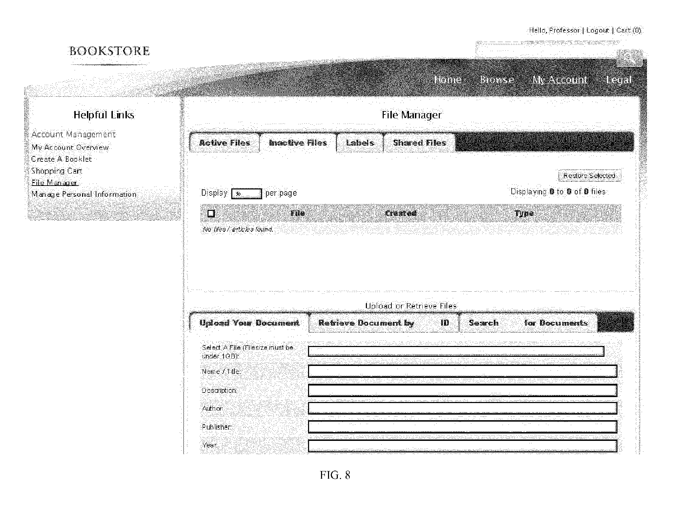

One or more files may be activated or deactivated by the compiler at Step 122 shown in Fig. 3. An active file may be deactivated by clicking on the small square box in front of its name and then clicking on the "Inactivate Selected" button. As mentioned above, active files may be the files that are or will be used in booklets or shared with others. Inactive files may be the files that are not used or to be used in any booklet. However, inactive files may not necessarily be deleted yet. A list of all inactive files may be viewed by clicking on the "Inactive Files" button on the top main menu of the "File Manager" page, as shown in Fig. 8.

Referring to Fig. 8, inactive files are listed in similar fashion as active files, and therefore not described in detail here to avoid redundancy. An inactive file may be restored back into an active file by first clicking on the small square box in front of the file name and then clicking on the "Restored Selected" button.

Referring back to Fig. 7, each file may be shown in a one-line view only with its name and the date of creation, or in an expanded view by clicking on a small plus sign icon in front of the file name. In the expanded view the small plus sign icon changes into a small minus sign icon. Clicking on the small minus sign icon will return back to the one-line view.

Particularly, at Step S124 shown in Fig. 3, the compiler may set and/or change file types to each of the active file listed, by clicking on the icons at the end of each file listed under the heading "Type" as shown in Fig. 7. These file type icons may include, for example, an icon for setting the file as a normal article, an icon for setting the file as a table of contents, an icon for setting the file as a cover page, and an icon for setting the file as a non-paginated file. The file types can be used when the file is used for generating a booklet to correctly position the file within the booklet. By clicking on one of these file type icons, the type of the file can be easily set or changed.

In addition, the compiler at Step S126 shown in Fig. 3 may share a selected file with one or more of his or her colleagues by first clicking on the small square box in front of the file name and then clicking on the "Share Selected" button in the supplement menu bar, upon which a small dialog box will be displayed as seen in Fig. 7 which allows the compiler to fill in the name of the colleague with whom the compiler desires to share the selected file. Sharing a selected file with a colleague will grant right to the colleague to view and use the file when the colleague creates his or her booklet.

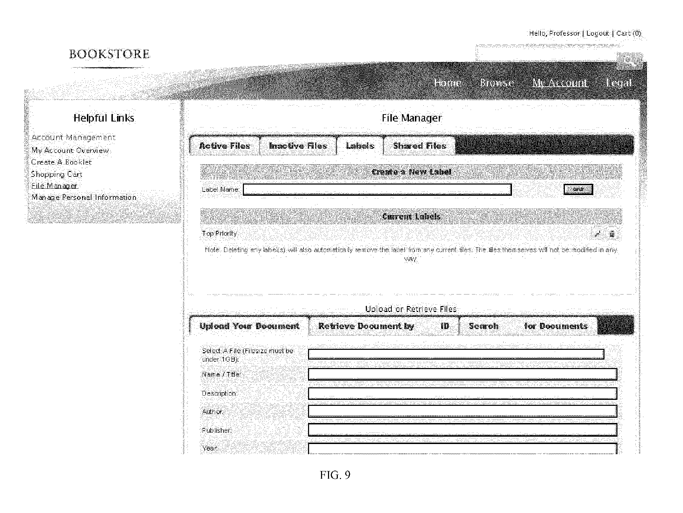

Referring to Fig. 9, labels may be viewed and managed by clicking on the "Labels" button in the top main menu of the "File Manager" page. Currently used labels, for example "Top Priority", are listed. Each label may be edited or deleted by clicking on respective icons at the end of the label name. New labels may be created by typing in a new label name in a text box provided above the list of the labels.

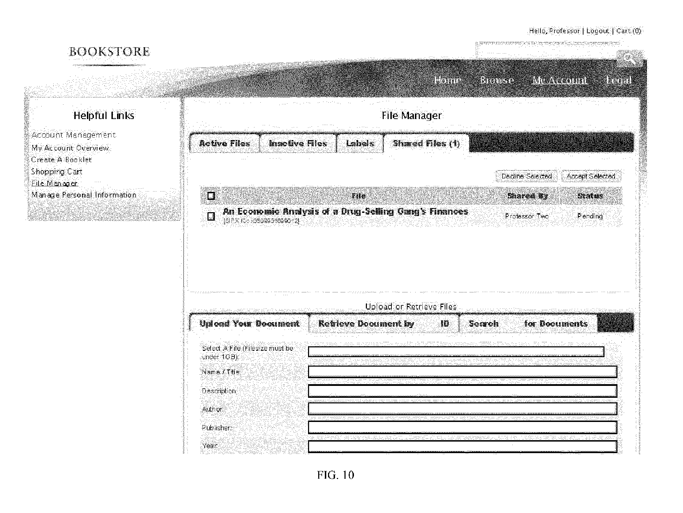

Moreover, the compiler at Step S128 shown in Fig. 3 can manage the files shared with him or her by his or her colleagues. By clicking on the "Shared File" button in the top main menu bar of the "File Manager" page, a page listing all filed shared by others will be displayed, as shown in Fig. 10.

Referring to Fig. 10, files that are shared by others are listed. It is noted that these are not the files that are shared by compiler with others. Rather, these are the files that are shared by others with the compiler. As the example in Fig. 10 shows, it is indicated under the heading "Shared By" that the file listed therein is shared by "professor two" who has shared this file with the compiler. The status of file is indicated under the heading "Status". The compiler may click on the small square box in front of the name of a file listed to select it, and then either decline his or her colleague's offer of sharing the selected file with the compiler, or accept the offer. This can be done by clicking on the "Decline Selected" or "Accept Selected" button respectively. Before the compiler declines or accepts the offer of sharing a file by others, the status of the shared file is indicated as "pending". After the compiler declines or accepts the offer of sharing a file by others by first selecting the file and then clicking on the "Decline Selected" or "Accept Selected" button respectively, the status of the file will change to "Declined" or "Accepted" accordingly.

The compiler at Step 132 shown in Fig. 3 may upload, retrieve or search files from the File Manager page. Referring back to Fig. 6, by clicking on the "Upload Your Document" button, the compiler may select a file stored locally, *e.g*. on the hard drive of his or her local computer or laptop such as client computer shown in Fig. 1, enter information about the file, *e.g.,* the name/title, description, author, publisher, year of publication, *etc.,* and then upload the file to the file folder assigned to the compiler at the online platform server such as server 2 shown in Fig. 1. Once the file is uploaded, the compiler may manage it with all other files in the compiler's file folder as described above.

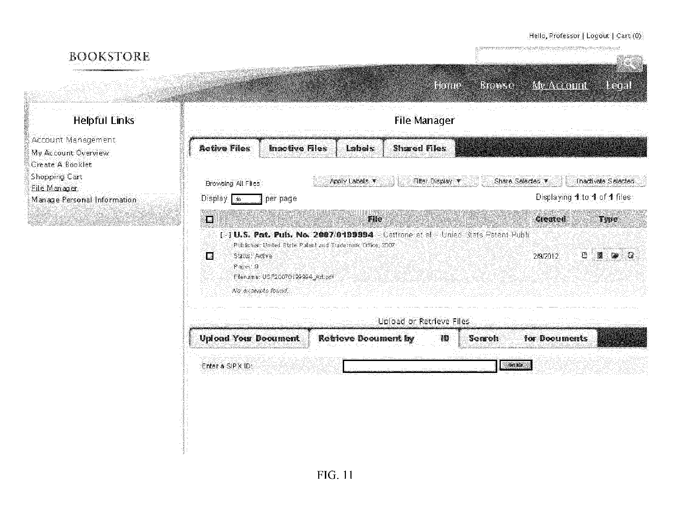

Referring to Fig. 11, the compiler may retrieve a document from a database maintained by, *e.g*., the copyright management center 6 shown in Fig. 1. In this example, the compiler may enter a document ID of an article if the compiler knows the document ID of the article, and retrieve it from the copyright database.

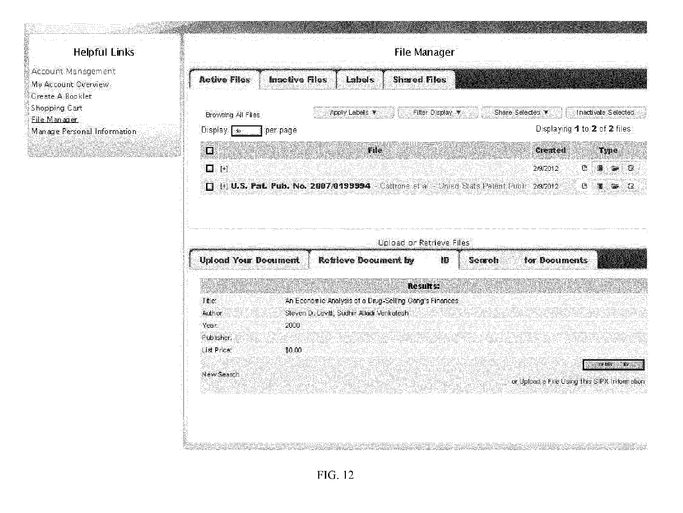

Referring to Fig. 12, when a document is found with the ID provided, its information will be displayed to the compiler, including the title, author, year of publication, publisher, and cost. If this is the right file, then the compiler can click on the "Use This File" button and the retrieved file will be placed in the compiler's file folder. Alternatively, if the compiler realizes from the information provided that he or she has a previously obtained and better version of the same document, the compiler may use his or her own version of the document by uploading his or her own version of the document but using the document information provided by the database so that matching document information and other available information such as copyright license and royalty information are re-associated with the uploaded version. If the retrieved file is not the document wanted by the compiler, a new search may be conducted by clicking on the "New Search" button. It is understood that other copyright management center database or other third party databases may be used for retrieving an article, document or file.

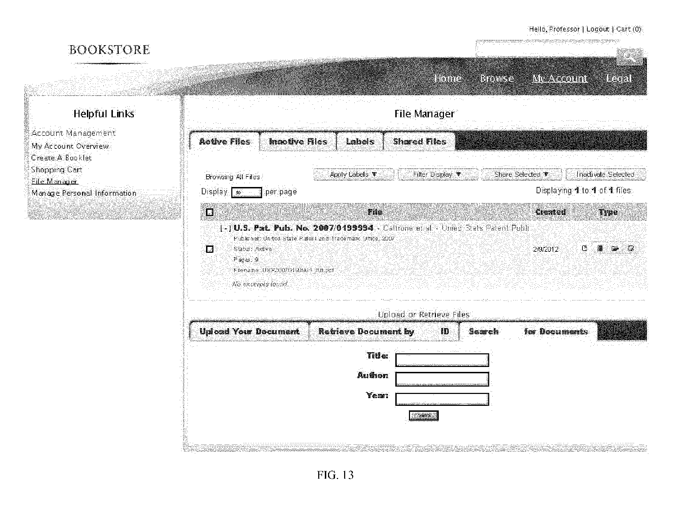

Referring to Fig. 13, the compiler may search for a document from a database if the compiler does not know the document ID assigned or used by the database. The compiler may enter the title, author, and/or year of publication of the document, and a search will be conducted within the database. If the document is found, a screen similar to the one shown in Fig. 12 will be displayed and the compiler may use that document, use his or her own version of the document if so desired, or search for another document, as more fully described above.

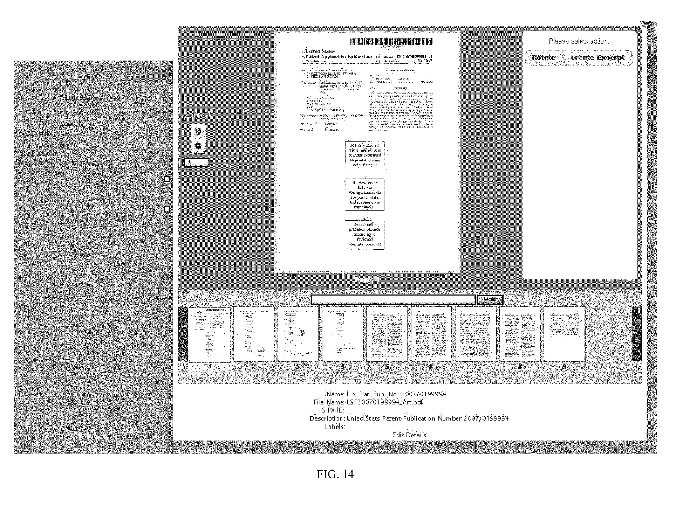

Referring back to Fig. 7, the compiler may click on the name of any file listed in the list to display the contents of the file page by page, as seen in Fig. 14.

Referring to Page 14, there is shown an exemplary UI display of the full page contents of a file in the compiler's folder. Small thumbnail images are displayed with scroll bars at the lower portion of the page, along with detailed information of the file which may be edited by clicking on the "Edit Details" button. In the main window at the upper portion of the page, a large full image of a selected page is displayed, which may be zoomed in and out. The page may also be rotated to be viewed in a correct orientation by clicking on the "Rotate" button at the upper right corner of the page.

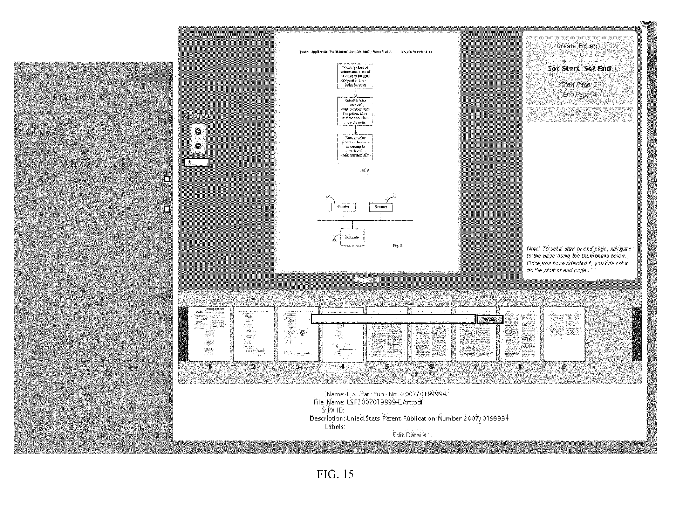

Moreover, the compiler at Step 134 shown in Fig. 3 may create an excerpt of the file by clicking on the "Create Excerpt" button at the upper right corner of the page shown in Fig. 14, which will open a small interactive dialog box as shown in Fig. 15.

Referring to Fig. 15, the small interactive dialog box shown at the upper right portion of the page includes tool buttons for the compiler to select a page range for the excerpt to be created. Once a page range is selected, the compiler may click on the "Save Excerpt" button, and the excerpt will be saved as a separate file in the compiler's file folder but with all the necessary information from the original file, including the page range of the original file from which the excerpt is created.

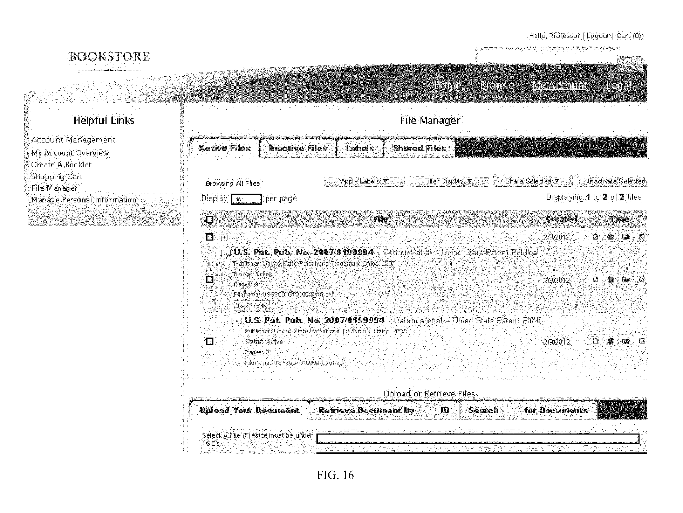

Referring to Fig. 16, there is shown an active file list including the new file from the excerpt. In this example, both the original 9-page file and the new 3-page excerpt file are listed, and each can be independently activated/inactivated, labeled or shared. Their file types can also be independently set and changed. However, since the excerpt file is created from the original file, it is listed one-level lower in the tree-display scheme so that if the compiler clicks on the small minus sign in front of the original file, the extended displays of the original file and the excerpt file will collapse at the same time into two separate one-line displays.

A compiler's well managed file folder is in a sense like a small personal "library" of the compiler. The library contains articles with metadata that may be used to retrieve correct intellectual property (IP) rights such as copyrights. Some of the articles in the library may already have associated IP rights, *e.g*., the articles retrieved from a copyright management center database such as the database at a copyright management center. Some of the articles on the library may not have IP right yet, *e.g*., the articles uploaded by the compiler. However, all necessary IP rights will be obtained by the online platform before the articles are used, *e.g.,* printed in a booklet ordered and purchased by the readers. The files in the library are not necessarily purchased yet so they may not be downloaded or otherwise distributed, but the compiler can preview them in order to create booklets, and the IP rights of the booklets will be paid for later when the booklets are purchased.

Some of the articles in the library may have pricing information as well. The price of an article may be based on a number of factors, *e.g*. the number of pages, membership or affiliation of the compiler and/or the readers, *etc.* The metadata and other information of the articles may be sent to the copyright management center for calculating the price of the articles.

Since each compiler will be assigned a file folder, he or she will have his or her own "library". However, compilers are able to share their files. This does not mean that they may download each other's shared file. Rather they have shared the information and access of the files at the online platform by sharing the files among them. Therefore shared files are not necessarily stored twice on the file server. If it is a file retrieved from the copyright management center database, then what is being shared among the compilers is merely a link to the file. However, if a compiler has uploaded his or her own version of a document and linked the uploaded version of the document to the metadata of the "original" document retrieved from the copyright management center database, then another compiler's library will only have the metadata linked to the original document as it stored in the copyright management center database, unless the compiler who has uploaded his or her own version of the document has shared the uploaded version with the other compiler.

Furthermore, if a compiler changes a file, *e.g*., rotates a page of a portable document format (PDF) file, then a PDF copy of the rotated page is created for this compiler only. Other compilers will still have the unchanged PDF version of the file in their library or when retrieving from the copyright management center database.

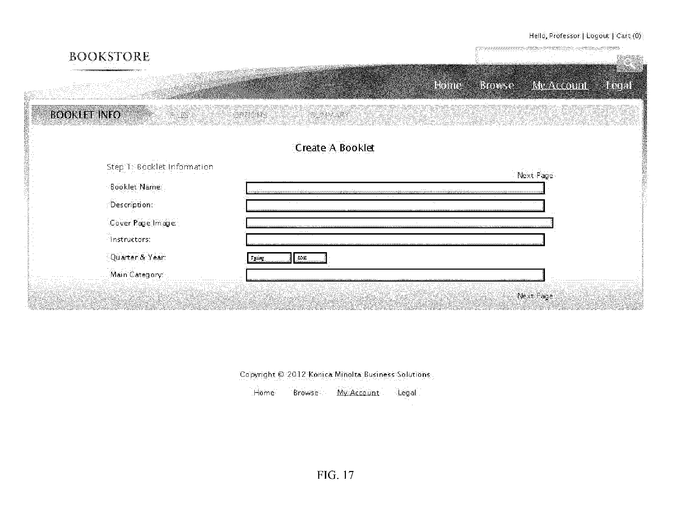

Referring back to Fig. 3, another important task that a compiler may perform at online platform is the generation of booklets, which is also a part of a computer-implemented method for generating and printing compilations of works in accordance with an embodiment of the present invention. At Step 140 the compiler may create a new booklet by clicking on the "Create A Booklet" link at the left portion of the page shown in Fig. 5 or any other page where such a link is provided, which will link to the "Create A Booklet" page as shown in Fig. 17.

Referring to Fig. 17, there is shown a screen shot of an exemplary UI display of the "Create A Booklet" page of the online platform web-site. At Step 142 shown in Fig. 3 the compiler enters booklet information. The UI shown in Fig. 17 provides text boxes for the compiler to input the name and description of the booklet. An image may also be uploaded from the compiler's local computer, *e.g.,* the client computer 4 shown in Fig. 1, to the online platform provider's server *e.g*. server 2 shown in Fig. 1. In this example the booklet is created for an educational institution, so the compiler may also enter the course instructor's name, the quarter and school year during which the booklet will be used, and the main category of the booklet.

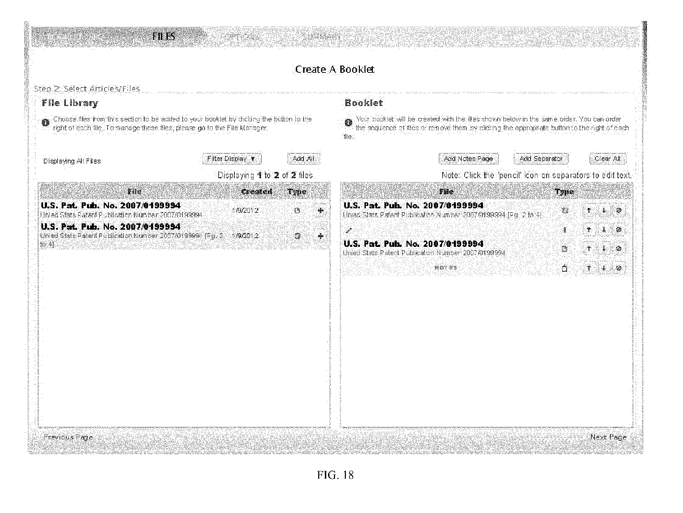

Referring to Fig. 18, there is shown the next page of the "Create A Booklet" UI for the compiler at Step 144 shown in Fig. 3 to select articles or files to be included in the booklet. As shown in Fig. 18, active articles that may be used in the booklet are displayed on the left side portion of the page. A filter may be applied to the file display to focus on certain labeled files by clicking on the "Filter Display", upon which used file labels are displayed so they can be selected to be used to filter the files. For example if the label "Top Priority" is selected for the filter, then only files labeled as "Top Priority" will be displayed in the file list.

The file type of each article is displayed by a small icon under the "Type" heading. This provides a quick reference to the compiler as to the type of each file listed. By clicking on the small plus sign icon at the end of file name and next to the file type icon, a file can be added to the booklet. Alternatively, clicking on the "Add All" button will add all files listed to the booklet. Files that are added to the booklet are displayed at the right side portion of the page.

In addition to the content files added to the booklet, the compiler at Step 146 shown in Fig. 3 may add notes pages to the booklet by clicking on the "Add Notes Page" button, and may also add separator pages to the booklet by clicking on the "Add Separator" button. Notes pages are blank pages for the readers to write their notes on, and separator pages are pages used for separating various parts, sections or chapters of the booklet.

For all files added into the booklet, including the notes and separator pages, their respective file types are displayed by the small file type icons under the "Type" heading. This provides a quick reference to the compiler as the type of each file, *e.g*., a normal article, a cover image, a table of contents (TOC), a non-paginated excerpt, a notes page, a separator page, *etc.* This will help the compiler to quickly determine the appropriate location of the files in the booklet, which may be adjusted by clicking on the moving up or moving down icons at the end of the file name. For example, a cover page may be placed at the beginning of the booklet, while a notes page may be placed at the end of the booklet.

A file that needs to be removed from the booklet may be removed by clicking on a small icon among the group of icons at the end of each file name. Alternatively all files in a booklet may be removed by clicking on the "Clear All" button as seen in Fig. 18. Page navigation buttons, *e.g.,* "Previous Page" and "Next Page", are provided so that the compiler may navigate among the various pages in the booklet creation process.

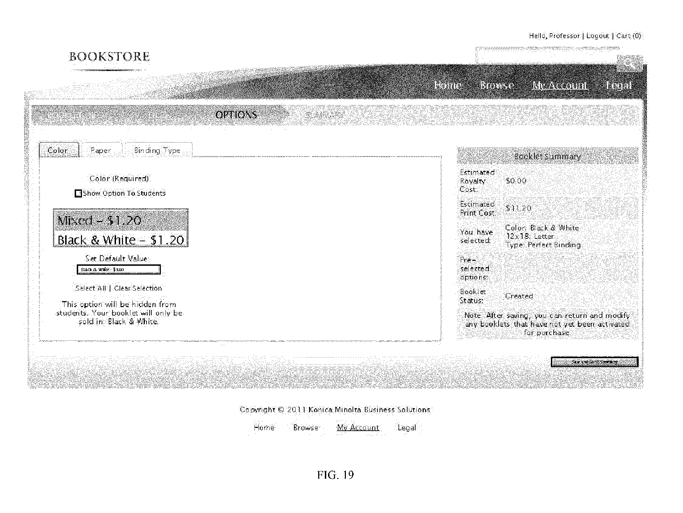

After the files of the booklet are selected, the compiler may at Step S148 shown in Fig. 3 specify the options for printing the booklet. The UI provided to the compiler at the online platform web-site are designed to make this a smooth process, as seen in Figs. 19-21.

Referring to Fig. 19, there is shown a screen shot of an exemplary UI display of the "Options" page of the online platform web-site. From this page the compiler may set various printing options, *e.g*., color, paper, binding type, *etc.,* by clicking on the "Color", "Paper", "Binding Type" buttons respectively. Pricing information for the different options is displayed. Some of the printing options may be required and therefore may not be changed by the readers when the readers later order the booklet. Therefore the compiler may elect not show some of the options to the readers by leaving the small box in front of "Show Option" unchecked. On Fig. 19 there is shown the color options that may be set by the compiler. The small window on the left portion of the page displays the color options and their respective pricing information. A booklet summary is displayed on the right portion of the page which is updated in real-time as soon as an option is changed by the compiler.

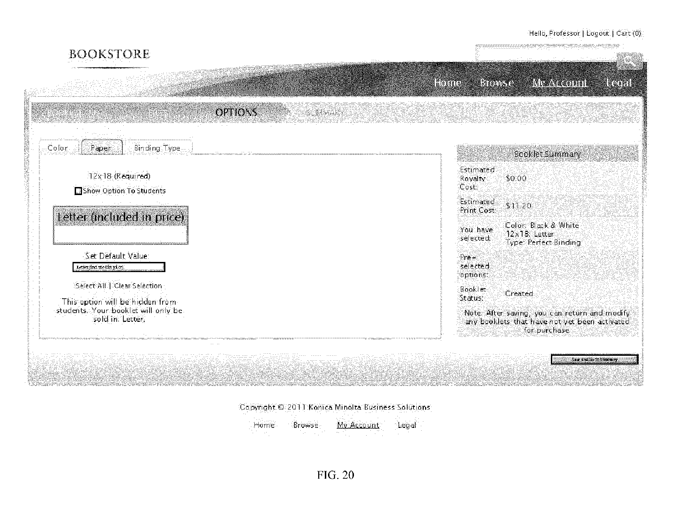

Referring to Fig. 20, there is shown the paper options that may be set by the compiler. The small window on the left portion of the page displays the paper options and their respective pricing information.

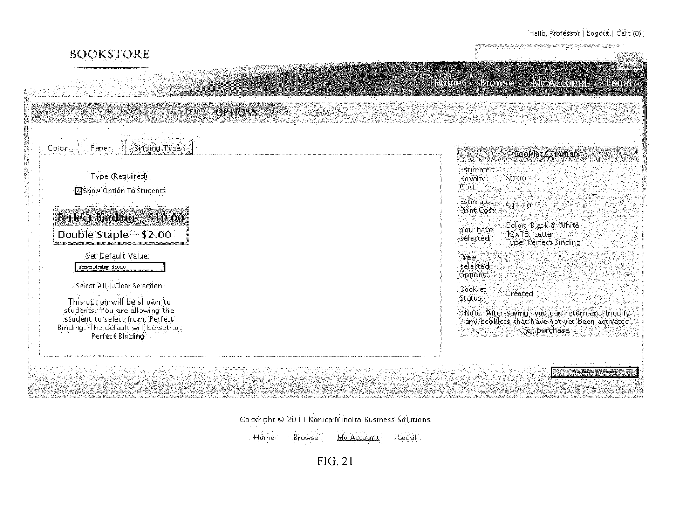

Referring to Fig. 21, there is shown the binding type options that may be set by the compiler. The small window on the left portion of the page displays the binding type options and their respective pricing information. In this example the readers are allowed to select different binding types so the small box in front of "Show Option" is checked. This will allow a reader to select different binding types at the time when the reader is ordering the booklet. For example the reader may select the "Double Staple" binding type which cost only $2.00 per booklet versus the "Perfect Binding" binding type which costs $10.00 per booklet in order to save some money. When printing options are selected, the compiler can see price difference and the price for the readers, for different options such as color, paper, binding type, *etc.* The compiler can see the end result (*i.e.*, price to the readers) of his or her choices of the printing options, so the compiler can be sensitive to the readers' cost.

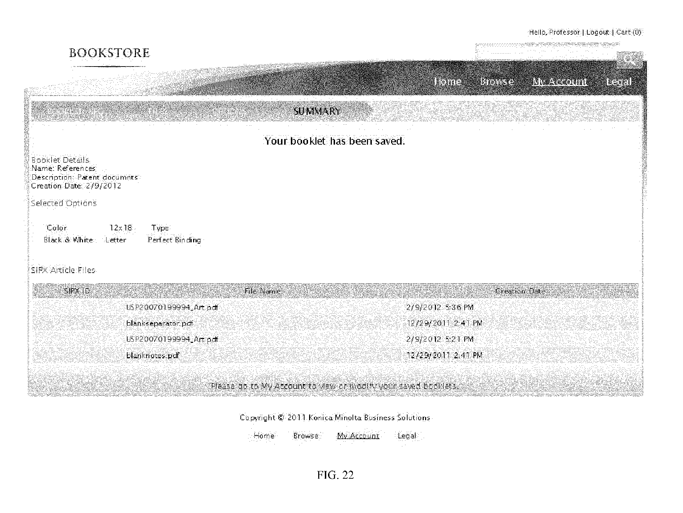

Once all options are set the compiler at Step S150 shown in Fig. 3 may click on the "Save and Go To Summary" button at the lower right corner of the page shown in the Options page (*e.g*., Figs. 19-21). This will bring up the "Summary" page as shown in Fig. 22.

Referring to Fig. 22, there is shown a screen shot of an exemplary UI display of the booklet creation "Summary" page of the online platform web-site. Details of the booklet, including the name, description, creation date, printing options, files included in the booklet, *etc.,* are all displayed for quick and easy reference. This provides an overview of the booklet created and saved, and helps the compiler to see whether it is created as planned.

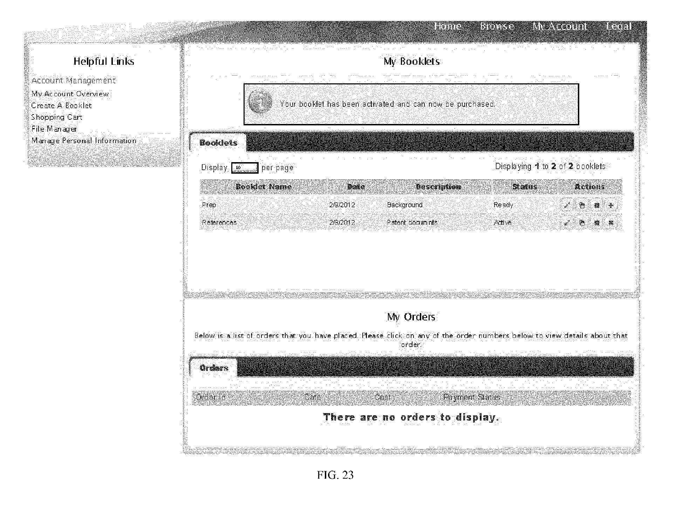

Referring to Fig. 23, there is shown a screen shot of an exemplary UI display of the "My Account Overview" page of the online platform web-site, showing the booklet that has just been created and saved.

The compiler at Step S160 shown in Fig. 3 may activate a booklet for later purchase by clicking on the small plus sign icon at the end of the booklet name under the "Actions" heading. A text message will be briefly displayed to confirm the activation of a booklet made available for purchase. If the compiler for whatever reason decides not to make the booklet available for purchase, the compiler may deactivate a booklet by clicking on the small cross sign icon at the end of the booklet name under the "Actions" heading. Consequently an active booklet will have a small cross sign icon at the end of its name under the "Actions" heading, whereas an inactive booklet will have a small plus sign icon at the end of its name under the "Actions" heading, as shown in Fig. 23. By activating a booklet, the compiler is in effect publishing the booklet or making the booklet ready for purchase.

When a compiler activates a booklet, the booklet compiler module 24 of the computer program shown in Fig. 2 automatically verify the copyright license or permission of all articles and contents used in the booklet and generate a copyright certificate. As part of the booklet creation process, after a booklet compilation is done, the online platform module of the program will access the copyright management center databases to retrieve IP and price information of the articles used in the booklet to calculate pricing for the clients, where a compiler's pricing and a reader's pricing may be different as they may hold different IP rights. The online platform program module will make sure that all articles have appropriate permissions such as the print permission. The module may also check to see if the database allows for excerpting by page range, or other alterations of the original articles such as rotating the pages, *etc.,* as such permissions and related policies vary among different copyright management centers and the respective databases maintained by them.

The booklet compiler module of the online platform program will run and check metadata or other information or indicia such as barcodes for PDF documents or tags for multimedia contents which contain pricing and royalty information and other requirements under applicable copyright license or permission for using the articles and contents in the booklet. Each article or content of the booklet may contain its copyright metadata or tag or other indicia or information item that may be verified, sometimes even on a per page basis. All of this check and verification procedure is included in the verification and check step S160.

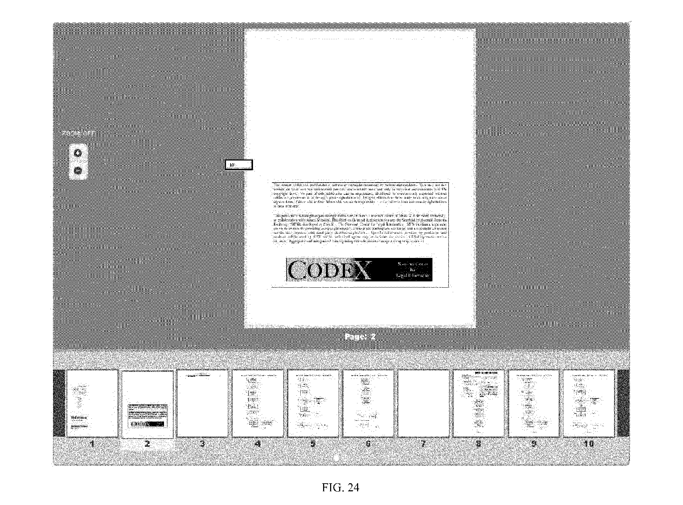

If all requirements are satisfied, then a certificate page will be automatically generated and inserted in the booklet, for example as the second page after the cover page of the booklet. An example of such certificate page is shown in Fig. 24. The copyright certification page is generated only if all articles and contents have proper copyright permission (*e.g*. print permission). If not all articles and contents have proper copyright permission, an error message will be generated and the booklet will not be generated or allowed for preview. By having the copyright certification page automatically included in the booklet, the users or readers of the book will have the peace of mind to know that all articles and contents used in the booklet have legitimate copyright license or permission.

The above described process may be implemented by a computer software program. The present invention also provides a computer program product that includes a computer usable non-transitory medium (*e.g*. memory or storage device) having a computer readable program code embedded therein for controlling a data processing apparatus, the computer readable program code configured to cause the data processing apparatus to execute the above described process.

It will be apparent to those skilled in the art that various modification and variations can be made in the method and related apparatus of the present invention without departing from the spirit or scope of the invention. Thus, it is intended that the present invention cover modifications and variations that come within the scope of the appended claims and their equivalents.

## Claims

1. A method of verifying intellectual property rights of a compilation of works, comprising the steps of:
compiling the compilation of works; and
before making the compilation of works available for purchase, automatically verifying intellectual property right of each of the works compiled to ensure legitimate distribution of the compilation of works.

2. The method of claim 1, wherein the step of verifying intellectual property right of a work compiled is based on a metadata embedded in the work.

3. The method of claim 1, wherein the step of verifying intellectual property right of a work compiled is based on a tag attached to the work.

4. The method of claim 1, wherein the step of verifying intellectual property right of a work compiled is based on indicia associated with the work.

5. The method of claim 1, wherein the step of verifying intellectual property right of a work compiled is based on information contained in the work.

6. The method of claim 1, wherein the step of verifying intellectual property right of a work compiled is based on a barcode printed on the work.

7. The method of any one of claims 1 to 6, further comprising the step of automatically inserting an intellectual property right certification page in the compilation of works after the intellectual property right of each of the works compiled is verified.

8. The method of any one of claims 1 to 7, further comprising the step of making the compilation of works available for purchase if the intellectual property rights of all of the works compiled are verified.

9. The method of any one of claims 1 to 8, further comprising the step of activating the compilation of works so that it can be purchased if the intellectual property rights of all of the works compiled are verified.

10. The method of any one of claim 1 to 9, further comprising the step of making the compilation of works unavailable for purchase if any intellectual property right of any of the works compiled cannot be verified.

11. A computer program therein for controlling a data processing apparatus, the computer program configured to cause the data processing apparatus to execute a process for verifying intellectual property right of a compilation of works, the process comprising the steps of:
compiling the compilation of works; and
before making the compilation of works available for purchase, automatically verifying intellectual property right of each of the works compiled to ensure legitimate distribution of the compilation of works.

12. The computer program of claim 11, wherein the step of verifying intellectual property right of a work compiled is based on a metadata embedded in the work.

13. The computer program of claim 11, wherein the step of verifying intellectual property right of a work compiled is based on a tag attached to the work.

14. The computer program of claim 11, wherein the step of verifying intellectual property right of a work compiled is based on indicia associated with the work.

15. The computer program of claim 11, wherein the step of verifying intellectual property right of a work compiled is based on information contained in the work.

16. The computer program of claim 11, wherein the step of verifying intellectual property right of a work compiled is based on a barcode printed on the work.

17. The computer program of any one of claim 11 to 16, wherein the process further comprises the step of automatically inserting an intellectual property right certification page in the compilation of works after the intellectual property right of each of the works compiled is verified.

18. The computer program of any one of claim 11 to 17, wherein the process further comprises the step of making the compilation of works available for purchase if the intellectual property rights of all of the works compiled are verified.

19. The computer program of any one of claim 11 to 18, wherein the process further comprises the step of activating the compilation of works so that it can be purchased if the intellectual property rights of all of the works compiled are verified.

20. The computer program of any one of claim 11 to 19, wherein the process further comprises the step of making the compilation of works unavailable for purchase if any intellectual property right of any of the works compiled cannot be verified.

21. A computer readable recording medium stored with the computer program of any one of claims 11 to 20.
